(19)

**Europäisches Patentamt**
**European Patent Office**
**Office européen des brevets**

(11) **EP 2 083 057 A1**

(12) **EUROPEAN PATENT APPLICATION**

(43) Date of publication:
**29.07.2009 Bulletin 2009/31**

(51) Int Cl.:
*C09J 7/02* (2006.01)       *C09J 7/04* (2006.01)
*C09J 121/02* (2006.01)

(21) Application number: **09000731.1**

(22) Date of filing: **20.01.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **21.01.2008 JP 2008010562**

(71) Applicant: **Nitto Denko Corporation**
**Ibaraki-shi, Osaka 567-8680 (JP)**

(72) Inventors:
• **Yatagai, Takahiro**
**Ibaraki-shi**
**Osaka 567-8680 (JP)**

• **Myojin, Masanori**
**Ibaraki-shi**
**Osaka 567-8680 (JP)**
• **Nagatsu, Hideki**
**Ibaraki-shi**
**Osaka 567-8680 (JP)**
• **Okada, Kenichi**
**Ibaraki-shi**
**Osaka 567-8680 (JP)**

(74) Representative: **Grünecker, Kinkeldey, Stockmair & Schwanhäusser**
**Anwaltssozietät**
**Leopoldstrasse 4**
**80802 München (DE)**

(54) **Aqueous-dispersion-type pressure-sensitive adhesive composition and pressure-sensitive adhesive sheet**

(57)    The present invention provides an aqueous-dispersion-type pressure-sensitive adhesive 2009 composition and a pressure-sensitive adhesive sheet formed thereof. This composition comprises a rubber latex, a tackifier resin emulsion, a dispersant composed primarily of a polycarboxylic acid (salt) having a hydrophobic side chain, and an emulsifier composed primarily of a polyoxyethylene alkyl ether sulfuric acid ester having an average polymerization degree of 16 to 80. A preferred dispersant contains carboxyl group at 2 to 6 mmol/g and an aqueous solution thereof at 1% by mass has a surface tension of 25 to 45 mN/m.

Figure 1

**Description**

**BACKGROUND OF THE INVENTION**

**1. Field of the Invention**

The present invention relates to an aqueous-dispersion-type pressure-sensitive adhesive (PSA) composition and a PSA sheet comprising a PSA layer formed of this composition.
This Application claims priority based on Japanese Patent Application No. 2008-010562 filed on January 21, 2008 and the entire content of the application is incorporated herein as reference.

**2. Description of the Related Art**

Aqueous-dispersion-type (aqueous) PSA composition, in which an adhesive component is dispersed in water, is preferred to solvent-type PSA composition in view of environmental concerns. Accordingly, shifting from solvent types to aqueous dispersion types has been taking place in the fields of various PSA compositions.
One of the properties required in these aqueous-dispersion-type PSA compositions is dispersion stability against mechanical shear (shear stress). In general, compositions containing rubber polymer as a base polymer (aqueous rubber base PSA dispersions) have been known to often exhibit insufficient mechanical stability as compared to those containing acrylic polymer as a base polymer. When the mechanical stability of an aqueous PSA composition is insufficient, aggregates are likely to form under mechanical shear caused by gear pumping, roll coating, and so on. The formation of aggregates may lower the commercial value (quality) of a PSA sheet prepared with the PSA composition. Moreover, productivity of an aqueous PSA composition having low mechanical stability tends to be low because it is more susceptible to limitations in production procedures such as mixing, pumping and coating.
Japanese Patent Application Publications Nos. 2007-211231, H7-331208 and H7-133473 relate to improving mechanical stability of aqueous PSA compositions. Japanese Patent Application Publication No. 2007-056248 describes means to increase adhesiveness to glass substrate, heat resistance and moisture resistance of an aqueous PSA composition.

**SUMMARY OF THE INVENTION**

Japanese Patent Application Publications Nos. 2007-211231, H7-331208 and H7-133473 describe technologies to increase mechanical stability by mixing in an aqueous PSA composition an emulsion prepared by emulsifying a tackifier resin in the presence of a specific component (emulsifier and the like). Apart from these technologies, a new technology to increase the mechanical stability of aqueous PSA composition will be useful, such as a means applicable to aqueous PSA composition comprising a tackifier resin emulsion prepared with a conventional emulsifier.
An objective of the present invention is to provide an aqueous-dispersion-type PSA composition with excellent mechanical stability, comprising a rubber base polymer. Another objective of this invention is to provide a PSA sheet prepared with this PSA composition.
The present inventors have found that mixing specific dispersant and emulsifier in an aqueous PSA composition could resolve the issue discussed above and have come to realize this invention.
The aqueous PSA composition provided by the present invention comprises a rubber latex and tackifier resin emulsion. The composition also comprises a dispersant composed primarily of a polycarboxylic acid or salt thereof (hereinafter, collectively referred to as "polycarboxylic acid (salt)", which may be either one or both of polycarboxylic acid and its salt), having a hydrophobic side chain. The dispersant may be composed essentially of a polycarboxylic acid (salt). The composition further comprises an emulsifier composed primarily of a polyoxyethylene alkyl ether sulfuric acid ester having an average polymerization degree of 16 to 80 (the alkyl group in the alkyl ether has 8 to 18 carbon atoms). This PSA composition exhibits excellent stability against mechanical shear. For instance, gear pumping will cause less aggregation. Accordingly, a high-quality PSA sheet can be produced with this PSA composition. Further, productivity can be increased because the above-described limitation by the procedural means in producing the PSA composition and/or PSA sheet is reduced.
In a preferred embodiment of the PSA composition disclosed herein, an aqueous solution of the dispersant at 1% by mass has a surface tension of about 25 to 45 mN/m at 20°C. In another preferred embodiment, the carboxyl group content of the dispersant (calculated from neutralization titration) is about 2 to 6 mmol/g. A PSA composition containing a dispersant that meets at least one (preferably both) of these conditions for the surface tension and carboxyl-group concentration may display especially great mechanical stability.
For the polycarboxylic acid (salt) having a hydrophobic side chain, a polycarboxylic acid (salt) wherein the hydrophobic side chain is a phenyl group is preferred. A preferred example of the polycarboxylic acids (salts) is a copolymer of styrene and acrylic acid (styrene-acrylic acid copolymer). A PSA composition containing a dispersant composed primarily of a styrene-acrylic acid copolymer may exhibit especially excellent mechanical stability

The amount of the dispersant contained is, based on the non-volatile components (solid matter), about 0.3 to 10 parts by mass to 100 parts by mass of a rubber latex. The amount of the emulsifier contained, based on the non-volatiles components, is preferably about 0.1 to 6 parts by mass to 100 parts by mass of a rubber latex. The combined amount of the dispersant and emulsifier is preferred to be about 15 parts by mass or less (typically, about 0.4 to 15 parts by mass) to 100 parts by mass of the rubber latex. This PSA composition can allow preparation of a PSA sheet that exhibits good mechanical stability and excellent water resistance (for instance, ability to maintain properties such as adhesive strength etc. when wet).

The amount of the tackifier resin emulsion contained, based on the non-volatile components, is preferred to be 20 to 200 parts by mass to 100 parts by mass of the rubber latex. This PSA composition can allow preparation of a PSA sheet that exhibits good mechanical stability and high performance (for instance, properties such as adhesiveness, cohesive strength and the like at high levels and a good balance).

The present invention further provides a PSA sheet comprising a PSA layer formed of one of the aqueous PSA compositions disclosed herein. As described above, the PSA composition having excellent mechanical stability enables efficient formation of a high-quality PSA layer and further a PSA sheet comprising the same since the aggregation during the production of the composition and PSA sheet can be suppressed.

The PSA sheet, for example, can be configured to have the PSA layer at least on a first side of a polyvinyl chloride sheet or paper substrate. A PSA sheet having a rubber-base PSA layer on such a substrate is desirable for electric insulation, protection and/or bundling of wire harnesses, and so on.

## BRIEF DESCRIPTION OF THE DRAWINGS

Figure 1 shows a cross section schematically illustrating an example of the PSA sheet configuration according to the present invention.
Figure 2 shows a cross section schematically illustrating another example of the PSA sheet configuration according to the present invention.
Figure 3 shows a cross section schematically illustrating another example of the PSA sheet configuration according to the present invention.
Figure 4 shows a cross section schematically illustrating another example of the PSA sheet configuration according to the present invention.
Figure 5 shows a cross section schematically illustrating another example of the PSA sheet configuration according to the present invention.
Figure 6 shows a cross section schematically illustrating another example of the PSA sheet configuration according to the present invention.
Figure 7 shows IR spectrum of dispersant A
Figure 8 shows IR spectrum of dispersant B

## DETAILED DESCRIPTION OF THE INVENTION

Hereinafter, preferred embodiments according to the present invention will be described. The mater which is other than that specifically referred to in this specification, but is necessary for carrying out the present invention, may be understood as a matter of design choice for those skilled in the art based on the conventional art The present invention can be carried out based on the contents disclosed in this specification and the technological common knowledge in the art.

Rubber latex used in the aqueous PSA composition disclosed herein may be a water dispersion of a conventional rubber polymer. Either natural or synthetic rubber latex can be used. Examples of synthetic rubber latex include styrene-butadiene copolymer latex (SBR latex), chloroprene latex and the like. These rubber latexes can be used alone or in combination of two or more kinds.

For the natural rubber latex, for instance, a rubber conventionally used in aqueous PSA composition can be used without any particular limitation. It may or may not be depolymerized. Natural rubber latex as referred herein is not limited to an unmodified natural rubber, and can be, for example, a rubber latex modified with acrylic acid ester and so on. Unmodified and modified rubber latexes can be used in combination.

As for the synthetic rubber latex (SBR latex, chloroprene latex, etc), any rubber commercially available for PSA can be used without any particular limitation. Both unmodified and modified (for example, modified via carboxylation) rubber latexes can be used.

In a preferred embodiment of the PSA composition of the present invention, the composition comprises natural rubber and SBR latexes. With this PSA composition, can be produced PSA sheets (for instance, PSA tapes for electric insulation) having excellent adhesiveness and so on. The mass ratio of natural rubber latex to SBR latex (natural rubber latex:SBR latex) is, based on the non-volatiles, within a range of preferably about 10:90 to 90:10, more preferably about 20:80 to 80:20, even more preferably about 30:70 to 70:30.

The tackifier resin emulsion used in the aqueous PSA composition disclosed herein may be a water dispersion of a conventional tackifier resin. The tackifier resin is not particularly limited, but can be, for example, a rosin, hydrocarbon, terpene, alkylphenol and the like. Of these, one can be used alone or a combination of two or more can be used.

Examples of tackifier rosin resin include unmodified rosins (raw rosins) such as gum rosin, wood rosin and tall-oil rosin; modified rosins obtained by subjecting unmodified rosins to hydrogenation, disproportionation, polymerization and so on (hydrogenated rosins, disproportioned rosins, polymerized rosins, other chemically-modified rosins and the like); and other various rosin derivatives.

Examples of rosin derivatives include rosin esters and phenolic rosins. Rosin esters include: rosin esters obtained by esterification of unmodified or modified rosin with a polyol; polyol esters of unsaturated fatty acid-modified rosins obtained by partial modification of unmodified or modified rosin with an unsaturated fatty acid (fumaric acid, maleic acid or the like) followed by esterification; polyesters of unsaturated fatty acid-modified, disproportionated rosins obtained by partial modification of unmodified or modified rosin with an unsaturated fatty acid followed by disproportionation and esterification; and the like. Phenolic rosins include rosins obtained by condensation of rosin and phenol followed by thermal polymerization; rosins obtained by esterification of the thermal-polymerized polymers; and the like. Polyol used for the esterification is not particularly limited, and can be, for example, various conventional polyols such as diethylene glycol, glycerin, trimethylolpropane, trimethylolethane, 1,2,6-hexanetriol, 1,2,4-butanetriol, pentaerythritol, and the like.

Examples of tackifier hydrocarbon resins (may be referred to as petroleum derivatives) include aliphatic hydrocarbons, aromatic hydrocarbons, aliphatic/aromatic hydrocarbons, hydrogenated products thereof and the like.

Examples of aliphatic hydrocarbon resins include homopolymers and copolymers of primarily C5 fractions of petroleum naphtha (piperylene, isoprene, 2-methyl-2-butene, dicyclopentadiene and the like) and hydrogenated products thereof (so-called C5 petroleum resins and the like). Examples of aromatic hydrocarbon resins include homopolymers and copolymers of primarily C9 fractions of petroleum naphtha (styrene, methylstyrene, indene, methylindene, coumarone and the like) and hydrogenated products thereof (so-called C9 petroleum resins). Aliphatic/aromatic hydrocarbons include, for instance, copolymers of primarily C5 and C9 fractions from petroleum naphtha as well as hydrogenated products thereof (so-called C5-C9 copolymerized petroleum resins).

Examples of tackifier terpene resins include terpene resins such as homopolymers and copolymers of terpenes like α-pinene, β-pinene, limonene and dipentene, and hydrogenated products of these; modified terpene resins such as aromatic terpenes obtained by copolymerization of a terpene with an aromatic monomer such as styrene as well as hydrogenated products of these; and the like.

As for the alkylphenol tackifier resins, those generally known in the field of PSA and the like can be used without particular limitation. Both resols and novolacs can be used.

Tackifier resin emulsion wherein a tackifier resin is dispersed in water can be prepared by a known method appropriate for emulsifying a tackifier resin or a commercial tackifier resin emulsion can be used instead. Examples of the emulsification method include homogenization, phase-inversion emulsification and the like.

Homogenization can be carried out, for example, in such a way that an appropriate emulsifier is added to a solution of tackifier resin dissolved in a solvent (typically, benzene, toluene or the like) and after the resulting mixture is emulsified by a homogenizer, the solvent is removed (for instance, under reduced pressure) if necessary. Alternatively, a tackifier resin emulsion can be prepared with essentially no organic solvent by melting the tackifier resin at a temperature above its softening point; adding water and an appropriate emulsifier thereto; and emulsifying the resulting mixture by homogenizer (solvent-free homogenization).

Phase-inversion emulsification can be carried out, for instance, in such a way that a tackifier resin is tempered with a small amount of solvent (benzene, toluene, etc.); an appropriate emulsifier is added thereto and the mixture further tempered; and hot water is gradually added to enable phase inversion. Alternatively, a tackifier resin emulsion can be prepared with essentially no organic solvent by tempering an emulsifier with a tackifier resin heated to a temperature above its softening point and facilitating phase inversion with gradual addition of hot water (solvent-free phase-inversion emulsification).

Emulsifier used for the emulsification of a tackifier resin is not particularly limited to, but can be appropriately selected from conventional emulsifiers. Anionic emulsifier and/or nonionic emulsifier are preferred. Examples of anionic emulsifiers include: alkyl sulfate salts such as sodium lauryl sulfate, ammonium lauryl sulfate, potassium lauryl sulfate and the like; polyoxyethylene alkyl ether sulfate salts such as sodium polyoxyethylene lauryl ether sulfate and the like; polyoxyethylene alkyl phenyl ether sulfate salts such as ammonium polyoxyethylene lauryl phenyl ether sulfate, sodium polyoxyethylene lauryl phenyl ether sulfate and the like; sulfonate salts such as sodium dodecylbenzenesulfonate and the like; sulfosuccinates such as disodium monolauryl sulfosuccinate, disodium lauryl sulfosuccinate and the like; and so on. Examples of nonionic emulsifiers include: polyoxyethylene alkyl ethers such as polyoxyethylene lauryl ether and the like; polyoxyethylene alkyl phenyl ethers such as polyoxyethylene lauryl phenyl ether and the like; polyoxyethylene fatty acid esters; polyoxyethylene-polyoxypropylene block polymers; and the like.

The ratio of tackifier resin emulsion to rubber latex contained in the PSA composition can be selected appropriately depending on its application. Typically, based on the mass of non-volatiles, the composition desirably contains about 20 to 200 parts by mass (preferably about 30 to 150 parts by mass, for instance, about 40 to 100 parts by mass) of tackifier resin emulsion to 100 parts by mass of rubber latex. When the amount of tackifier resin emulsion is exceedingly lower than this range, the adhesiveness of a PSA sheet prepared with this composition is likely to be lowered. On the other hand, when the amount of tackifier resin emulsion is exceedingly higher than the above range, the cohesive strength of a resulting PSA tends to be reduced.

The PSA composition disclosed herein comprises a prescribed dispersant containing, as a primary component, a polycarboxylic acid (salt) having a hydrophobic side chain, in addition to a rubber latex and tackifier resin emulsion. Here, the term "primary component" refers to a component that amounts to 50 mass% or more of all non-volatiles in the dispersant The prescribed dispersant typically contains a polycarboxylic acid (salt) amounting to 75 mass% or more (for instance, 90 mass% or more) of the non-volatiles. It can be composed essentially of a polycarboxylic acid (salt) for the non-volatiles.

The hydrophobic side chain of polycarboxylic acid (salt) can be, for instance, a hydrophobic functional group (pendant group) such as phenyl, alkylphenyl, linear or branched alkyl with 5 or more (preferably 8 or more, typically 20 or fewer) carbon atoms, cycloalkyl and the like. The hydrophobic functional group may contain a low-polar substitution group (for example, an alkyl group such as methyl and the like).

The prescribed dispersant may contain one, two or more kinds of polycarboxylic acid (salt). The polycarboxylic acid (salt) may contain one, two or more kinds of hydrophobic side chain. Preferred is a dispersant containing a polycarboxylic acid (salt) with at least a phenylic hydrophobic side chain (for instance, a dispersant primarily or, in typical, essentially composed of the polycarboxylic acid (salt)). In other words, a preferred PSA composition comprises a polycarboxylic acid (salt) having at least a phenylic hydrophobic side chain.

The presence of this sort of a polycarboxylic acid (salt) with a hydrophobic side chain in the PSA composition can be confirmed, for instance, by infrared (IR) spectroscopy (typically, by identifying characteristic absorbance of the hydrophobic functional group on its IR spectrum). For example, when styrene has been copolymerized to form the polycarboxylic acid (salt) (that is, when the hydrophobic side chain includes at least phenyl group), that styrene is a comonomer of the polycarboxylic acid (salt) (i.e., that it is considered as the prescribed dispersant in the technology disclosed herein) can be confirmed by characteristic IR absorptions around 3030 cm$^{-1}$, 1550 to 1580 cm$^{-1}$, 760 cm$^{-1}$, and 700 cm$^{-1}$

A polycarboxylic acid (salt) containing a desired hydrophobic side chain can be prepared, for instance, by polymerizing, by an appropriate methodology, starting monomers composed of a monomer to provide a desired hydrophobic side chain and a monomer to furnish a carboxyl group. The molecular weight of the polycarboxylic acid (salt) is not particularly limited, but, for instance, can be used preferably one with a mass average molecular weight of $1 \times 10^3$ to $200 \times 10^3$ (more preferably of about $5 \times 10^3$ to $50 \times 10^3$).

Examples of the monomer to furnish a carboxyl group (carboxyl-group-containing monomer) include: ethylenic unsaturated monocarboxylic acids such as acrylic acid, methacrylic acid, crotonic acid, cinnamic acid and the like; unsaturated dicarboxylic acids such as maleic acid, itaconic acid, citraconic acid, anhydrides of these, fumaric acid and the like; unsaturated dicarboxylic acid monoesters such as itaconic acid monomethyl ester, itaconic acid monobutyl ester, mono-2-acryloxyethyl phthalate; unsaturated tricarboxylic acid monoester such as 4-methacryloxyethyl trimellitic acid, 2-methacryloxyethyl pyromellitic acid and the like; carboxyalkyl acrylate such as carboxyethyl acrylate, carboxypentyl acrylate and the like; and so on. The starting monomers may contain one, two or more selected from these carboxyl-group-containing monomers. For instance, carboxyl-group-containing monomers such as acrylic acid, carboxyethyl acrylate and the like are preferred.

Examples of the monomer to provide a hydrophobic side chain (hydrophobic-group-containing monomer) include monomers containing per molecule a hydrophobic functional group and an ethylenic unsaturated moiety as described above such as styrene, α-methylstyrene, vinyltoluene, cyclohexyl acrylate, isobornyl acrylate, 2-ethylhexyl acrylate, benzyl acrylate, phenoxyethyl acrylate, cinnamic acid, and the like. Cinnamic acid can be used as the carboxyl-group-containing monomer as well as the hydrophobic-group-containing monomer.

The cation of polycarboxylic acid (salt) is not particularly limited. Examples include alkali metal ions such as sodium and potassium ions; alkali earth metal ions such as calcium ion, magnesium ion and the like; quaternary ammonium ions such as ammonium ion, mono-alkyl ammonium ion, dialkyl ammonium ion, tri-alkyl ammonium ion, tetraalkyl ammonium ion and the like. An ammonium salt or a sodium salt of polycarboxylic acid is preferred.

The prescribed dispersant preferably has a surface tension of about 25 to 45 mN/m (more preferably about 30 to 40 mN/m; for instance, about 35 to 40 mN/m) when measured with a 1 mass% aqueous solution thereof at 20°C. When the surface tension is exceedingly higher than the above range, adsorption of the dispersant onto the particles in the aqueous PSA dispersion is likely to decrease thereby to result in an insufficient dispersability. The surface tension can be determined by known methods such as the Wilhelmy method using a commercial surface tension measuring system.

The prescribed dispersant preferably contains carboxyl group at 2 to 6 mmol/g (more preferably at 2.5 to 3.5 mmol/g) determined by neutralization titration. When the carboxyl group content is exceedingly greater or less than this range, the ability to increase the mechanical stability of aqueous PSA dispersion tends to become degraded. The neutralization titration to determine the carboxyl group content can be carried out, for instance, by the following procedures: after a prescribed amount of an analyte dispersant is weighed out and diluted, an excess of a standard acid solution (aqueous acidic solution of hydrochloric acid or the like) is added to the dispersant contained in the diluted solution to prepare a sample for titration; this sample is titrated (back titrated) with a standard basic solution (aqueous basic solution of sodium hydroxide, potassium hydroxide or the like). The carboxyl group content of the dispersant can be determined from the first and second equivalence points obtained with pH electrodes.

Desirable examples of polycarboxylic acid (salt), which is a primary component of the prescribed dispersant, include copolymers obtained by polymerization of starting monomers containing styrene and acrylic acid (i.e., polyacrylic acid or its salt having phenyl group as a hydrophobic side chain). The starting monomers may comprise essentially styrene and acrylic acid alone, or may further comprise a monomer in addition to the styrene and acrylic acid. The composition of the starting monomers can be selected so as to obtain a preferred surface tension and/or carboxyl group content Commercially available dispersants that can be applied preferably include trade names "SN Dispersant 5027" (ammonium salt of polycarboxylic acid having a phenyl-group-containing hydrophobic side chain) from San Nopco Limited, "DKS Discoat N-14" (ammonium salt of polycarboxylic acid having a phenyl-group-containing hydrophobic side chain) from Dai-Ichi Kogyo Seiyaku Co., Ltd., "Arastar 703S" (styrene-maleic acid resin dispersant) from Arakawa Chemical Industries, Ltd. and the like.

The amount of the prescribed dispersant can be, for instance, about 0.3 to 10 parts by mass to 100 parts by mass of rubber latex, based on the mass of non-volatiles. A preferred PSA composition contains about 2 to 8 parts by mass of a prescribed dispersant to 100 parts by mass of rubber latex. When the amount of the prescribed dispersant is exceedingly less than this range, its ability to increase the mechanical stability of aqueous PSA dispersion tends to be insufficient. When the amount of the prescribed dispersant is exceedingly greater than this range, a PSA sheet prepared with this PSA composition tends to show degraded properties (such as water resistance).

The PSA composition disclosed herein comprises a prescribed emulsifier containing as a primary component a polyoxyethylene alkyl ether sulfuric acid ester (may be referred to as polyoxyethylene alkyl ether sulfuric acid ester salt or polyoxyethylene alkyl ether sulfuric acid salt) with an average polymerization degree of 16 to 80. The number of carbon atoms in the alkyl group of the alkyl ether is 8 to 18. Here, the term "primary component" refers to a component that amounts to 50 mass% or more of the non-volatiles just as described above. The prescribed emulsifier typically contains a polyoxyethylene alkyl ether sulfuric acid ester amounting to 75 mass% or more (for instance, 90 mass% or more) of the non-volatiles. It can be composed essentially of a polyoxyethylene alkyl ether sulfuric acid ester in terms of the non-volatiles.

A typical example of the prescribed emulsifier is composed primarily of a polyoxyethylene alkyl ether sulfuric acid ester represented by the following chemical formula (1):

$$RO\text{-}(CH_2CH_2O)_n\text{-}SO_3X \qquad (1)$$

wherein R is a straight or branched alkyl group of 8 to 18 carbon atoms, for example, 2-ethylhexyl, oleyl, dodecyl, tridecyl, tetradecyl, cetyl, stearyl groups and the like; n is a number between 16 and 80 with 20 to 60 preferred; X is a monovalent cation, which may be, for instance, one of the cations mentioned above as examples of cations to form polycarboxylic acid salt, such as alkali metal ions, quarternary ammonium ions and the like. In a preferred polyoxyethylene alkyl ether sulfuric acid ester, X is ammonium ion or sodium ion.

Of these polyoxyethylene alkyl ether sulfuric acid esters, one can be used alone; or a combination of two or more (for instance, those that differ from each other in the number of carbon atoms in the alkyl group and/or structure, average polymerization degree and so on) can be used. Examples of the emulsifier that can be prescribed include trade names "Newcol 1020-SN," "Newcol 2320-SN," and "Newcol 2360-SN" from Nippon Nyukazai Co., Ltd.; trade name "Hitenol L-16" from Dai-Ichi Kogyo Seiyaku Co., Ltd.; and the like.

The amount of the prescribed emulsifier can be, based on the mass of non-volatiles, for instance, about 0.1 to 6 parts by mass (preferably about 0.5 to 5 parts by mass) to 100 parts by mass of rubber latex. When the amount of the prescribed emulsifier is exceedingly less than this range, its ability to increase the mechanical stability of aqueous PSA dispersion tends to be insufficient When the amount of the prescribed emulsifier is exceedingly greater than this range, a PSA sheet prepared with this PSA composition tends to show degraded properties (water resistance, cohesive strength and so on).

Based on the non-volatiles, the combined mass of the prescribed dispersant and emulsifier in the PSA composition disclosed herein is preferably 15 parts by mass or less (typically, about 0.5 to 15 parts by mass) and more preferably about 10 parts by mass or less (typically, about 2.5 to 10 parts by mass) to 100 parts by mass of rubber latex. When the combined mass is not sufficient, the mechanical stability may not be sufficiently increased. When too much, properties (water resistance, cohesive strength, and so on) of a resulting PSA sheet may be compromised.

The PSA composition may contain, as needed, various additives generally used in the field of aqueous PSA compositions such as viscosity modifier (viscosifier), leveling agent, plasticizer, softening agent, filler, colorant such as pigment and dye, photostabilizer, anti-aging agent, antioxidant, water resistance additive, antifoamer, preservative, crosslinking agent; and the like. The PSA composition may contain, in addition to the prescribed dispersant, another dispersant (i.e., a dispersant other than the prescribed kind) as needed. For this, those that form protective colloids are preferred and can be used aqueous polymers such as gelatin, polyvinyl alcohol, polyvinyl alcohol derivative, water-soluble salt of cellulose, cellulose derivative, polyacrylic acid (salt) having no hydrophobic side chain, and the like. The PSA composition may contain, in addition to the prescribed emulsifier, another emulsifier as needed. For this, one that is different from the prescribed emulsifier can be selected, for example, from the emulsifiers listed for the emulsification of tackifier resin.

The PSA composition disclosed herein can be prepared, for instance, by mixing a rubber latex, tackifier resin emulsion, prescribed dispersant, prescribed emulsifier and an optional component (additive as listed above) as needed. The prescribed dispersant, prescribed emulsifier and optional component can be mixed as-is or as an aqueous solution or a dispersion (emulsion etc.). For example, after rubber latex is pre-mixed with the optional component, the resulting mixture can be mixed with the other components such as the tackifier resin emulsion and so on. Alternatively, the optional component can be emulsified, for instance, with the tackifier resin by homogenizer as described earlier and the resulting tackifier resin emulsion containing the optional component can be mixed with the other components such as rubber latex and so on.

The PSA sheet according to this invention comprises a PSA layer formed of one of the PSA compositions disclosed herein. The PSA sheet may comprise a substrate having this PSA layer on one or both sides; or may be substrate-free and embodied to have this PSA layer on a release liner. The concept of the PSA sheet herein includes so-called PSA tapes, labels, films and so on. The PSA layer is not limited to be continuous and may be in a regular or random pattern of dots, stripes and the like

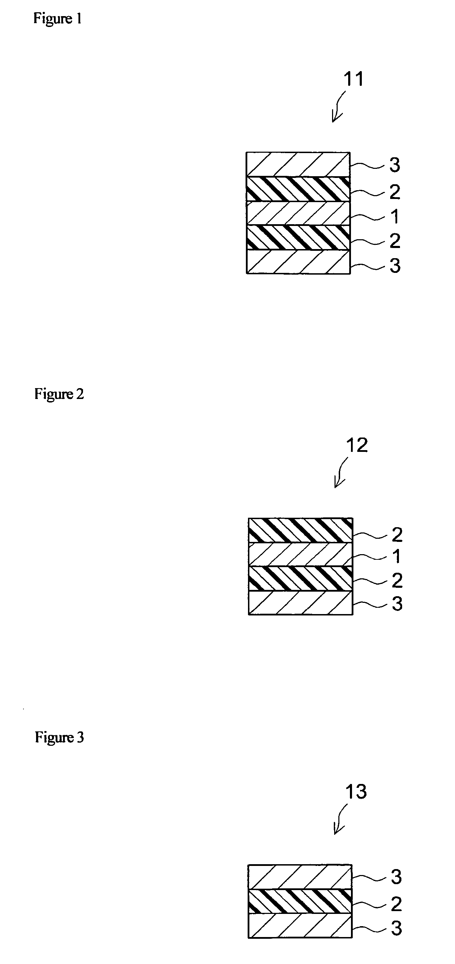

The PSA sheet disclosed herein may have, for instance, a cross section shown schematically in either of Figures 1 to 6. Of these, Figures 1 and 2 show examples of the configuration of a double-sided PSA sheet with a substrate. A PSA sheet 11 shown in Figure 1 has a configuration such that PSA layers 2 are provided on both sides of a substrate 1 and the PSA layers 2 are each protected with a release liner 3, of which at least the surface to contact the PSA layer is releasable. A PSA sheet 12 shown in Figure 2 has a configuration such that PSA layers 2 are provided on both sides of a substrate 1 and a first PSA layer 2 is protected with a release liner 3, of which both surfaces are releasable. The PSA sheet 12 in this configuration can be rolled up to bring a second PSA layer 2 into contact with the back side of the release liner 3 for protection thereof.

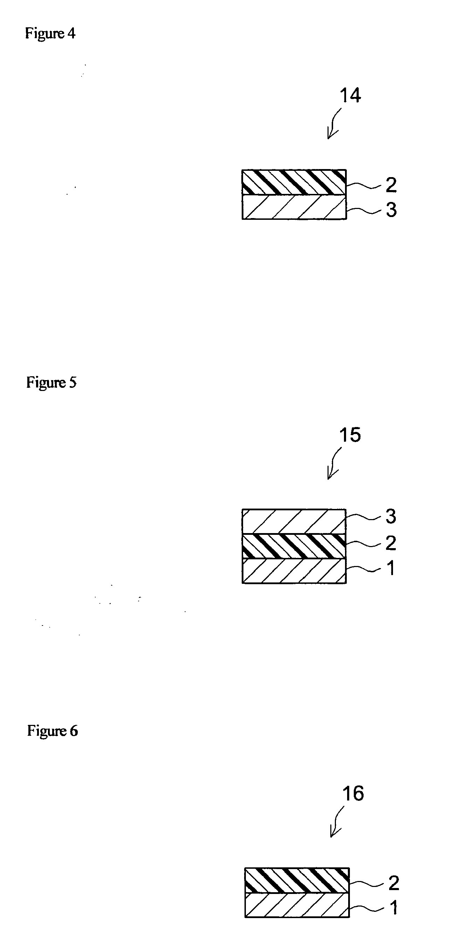

Figures 3 and 4 show examples of the configuration of a substrate-free PSA sheet. A PSA sheet 13 shown in Figure 3 has a configuration wherein a substrate-free PSA layer 2 is protected on both sides with release liners 3, of which at least the surface to contact the PSA layer is releasable. A PSA sheet 14 shown in Figure 4 has a configuration in which a substrate-free PSA layer 2 is protected on a first side with a release liner 3 of which both surfaces are releasable. When rolled up, a second side of the PSA layer 2 to be protected comes in contact with the back side of the release liner 3.

Figures 5 and 6 show examples of the configuration of a single-faced PSA sheet with a substrate. A PSA sheet 15 shown in Figure 5 has a configuration wherein a PSA layer 2 is provided on a first side of a substrate 1 and the surface (adhesive face) of the PSA layer 2 is protected with a release liner 3 of which at least the surface to contact the PSA layer is releasable. A PSA sheet 16 shown in Figure 6 has a configuration where a PSA layer 2 is provided on a first side of a substrate 1. A second side of the substrate 1 is releasable; and when the PSA sheet 16 is rolled up, the second side comes in contact with the PSA layer 2 so as to protect the surface (adhesive face) of the PSA layer with the second side of the substrate 1.

For the substrate to constitute these PSA sheets, can be used any one appropriately selected based on the application of the PSA sheet from: plastic films such as olefinic resin sheets (polyethylene film, polypropylene film, ethylene-propylene copolymer film and the like), polyvinyl chloride sheets (polyvinyl chloride film etc., which may be referred to as "PVC sheet"), polyester film etc.; foam substrates such as polyurethane foam, polyethylene foam and the like; paper such as kraft paper, crepe paper, Japanese paper ("washi"), and the like; fabrics such as cotton cloth, staple-fiber cloth and the like; unwoven cloth such as polyester unwoven cloth, vinylon unwoven cloth and the like; and metal foils such as aluminum foil, copper foil and the like; and so on. The plastic film may be either unstretched or stretched (uniaxially or biaxially stretched). For a PSA sheet for electric insulation, protection and/or bundling of wire harnesses, and so on, PVC sheet, paper (for instance, crepe paper) and the like are preferred as the substrate (support). The thickness of the substrate can be appropriately selected in accordance with the application, but is generally about 10

μm to 500 μm (typically, 10 μm to 200 μm).

The substrate may be designed with prints and the like on the substrate. The substrate may be treated on the surface with application of a primer coating, corona discharge or the like to retain a PSA layer. In an embodiment where a PSA layer is provided to a first surface of the substrate, a second surface (back side) of the substrate may be processed to be releasable if necessary.

The PSA layer may be formed, for instance, by applying (typically by coating) any aqueous PSA composition disclosed herein to a substrate or release liner and allowing the applied composition to dry. Coating of the PSA composition can be carried out with, for example, a conventional coater such as gravure roll coater, reverse roll coater, kiss roll coater, dip roll coater, bar coater, knife coater, spray coater and the like. The thickness of the coated PSA composition is not particularly limited, but can be about 2 μm to 150 μm (typically, about 5 μm to 100 μm, for instance, about 10 μm to 80 μm) after dried. To promote the crosslinking reaction or improve the productivity, the PSA composition is preferred to be dried with heating. Although it may vary depending on the type of the substrate, the drying temperature can be, for example, about 40 °C to 120 °C. For a PSA sheet with a substrate, the PSA composition may be directly applied to a substrate to form a PSA layer, or a PSA layer formed on a release liner may be transferred to the substrate.

The aqueous PSA dispersion disclosed herein exhibits high mechanical stability and thus formation of aggregates can be greatly suppressed against mechanical shear applied during the procedures of gear-pumping, coating by a roll coater, and so on. Accordingly, depreciation of the commercial value due to the aggregation can be avoided and a high-quality PSA sheet can be produced. Furthermore, because the mechanical stability of the PSA composition is increased, production procedures such as mixing, pumping, coating and so on are less limited and productivity of the PSA composition and/or PSA sheet can be increased.

For carrying out the present invention, it is not necessary to determine how the prescribed dispersant and emulsifier attribute to the increase in mechanical stability, but it can be considered as follows: in the PSA composition according to this invention, the prescribed emulsifier mainly contributes to an increase in the dispersion stability of rubber polymer (natural rubber etc.) and the prescribed dispersant primarily brings about an increase in the dispersion stability of tackifier resin. It can be assumed that from the relationship between the solubility parameters (SPs) of the components, those having similar SP values interact with each other to increase the stability. It is suggested that the addition of the prescribed stabilizing agents, which were selected appropriately in accordance with the types of the various dispersed particles contained in the PSA composition, were effective in greatly increasing the mechanical stability.

## EXAMPLES

Hereinafter, some examples according to the present invention will be described, but the present invention is not limited to these examples. In the following description, the "part(s)" and "%" are based on the mass of non-volatiles unless otherwise specified.

The following dispersants were used in the Examples below.

Dispersant A: a dispersant composed primarily of an ammonium salt of styrene-acrylic acid copolymer (trade name "SN Dispersant 5027" from San Nopco Limited)

Dispersant B: a dispersant composed primarily of an ammonium salt of styrene-acrylic acid copolymer (trade name "DKS Discoat N-14" from Dai-Ichi Kogyo Seiyaku Co., Ltd.)

Dispersant C: a dispersant composed primarily of a sodium polyacrylate (trade name "Aqualic DL-522" from Nippon Shokubai Co., Ltd.)

Dispersant D: a dispersant composed primarily of an ammonia-modified copolymer of iso-butylene and maleic acid anhydride (trade name "Isobam 110" from Kuraray Co., Ltd.)

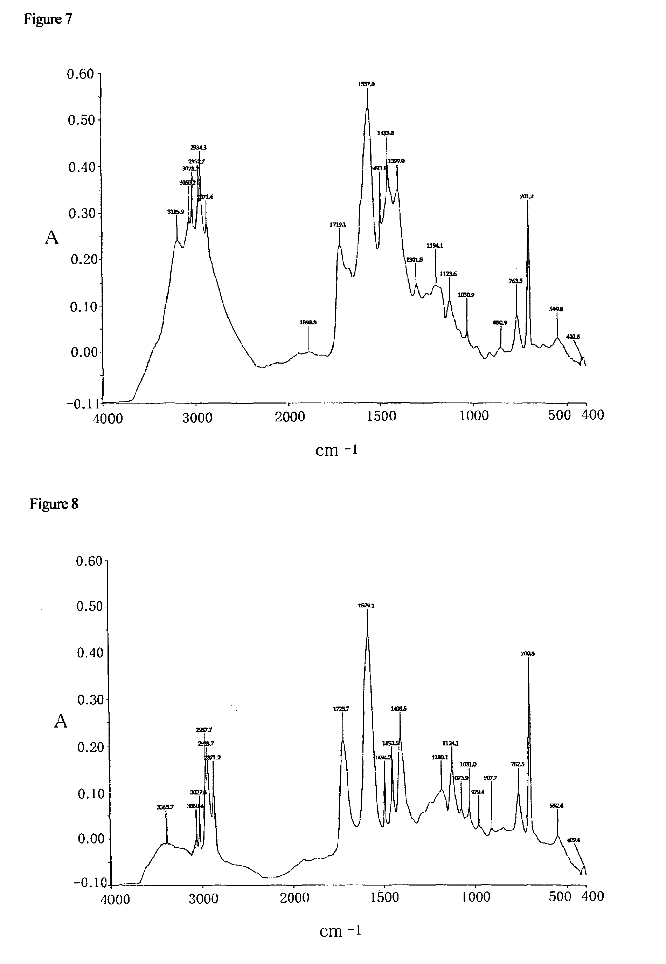

The values of surface tension and carboxyl-group contents of Dispersants A to D are shown in Table 1 along with the presence/absence of a hydrophobic side chain (phenyl group in these cases). IR spectra of Dispersants A and B were obtained by typical protocols. The obtained IR spectra of Dispersants A and B are shown in Figures 7 and 8, respectively. As shown in these spectra, with both Dispersants A and B, characteristic absorptions were observed around 3030 cm$^{-1}$, 1550 to 1580 cm$^{-1}$, 760 cm$^{-1}$ and 700 cm$^{-1}$. These results indicate that styrene has been copolymerized to form each polycarboxylic acid (salt) of Dispersants A and B (thus that both dispersants contain phenyl group as the hydrophobic side chain).

Table 1

| Dispersant | hydrophobic side chain | surface tension (mN/m) | carboxyl group content (mmol/g) |
|---|---|---|---|
| A | Present present | 39.5 | 3 |
| B | present | 38.8 | 2.8 |
| C | absent | 74.2 | 9.1 |
| D | absent | 71.0 | 4.5 |

The following emulsifiers were used in the Examples below

Emulsifier A: an emulsifier composed primarily of a polyoxyethylene alkyl(8 carbon atoms) ether sulfuric acid ester having an average polymerization degree of 20, that is, a compound represented by the above chemical formula (1), wherein n is 20 and R is an alkyl group having 8 carbon atoms (trade name "Newcol 1020-SN" from Nippon Nyukazai Co., Ltd.).
Emulsifier B: an emulsifier composed primarily of a polyoxyethylene alkyl(12 carbon atoms) ether sulfuric acid ester having an average polymerization degree of 60, that is, a compound represented by the above chemical formula (1), wherein n is 60 and R is an alkyl group of 12 carbon atoms (trade name "Newcol 2360-SN" from Nippon Nyukazai Co., Ltd.).

Surface tension of each dispersant was determined by the following procedures: a 1 % aqueous solution of each dispersant was prepared with ion-exchanged water; and the surface tension of each aqueous solution was measured by the Wilhelmy method at 20 °C using a glass tension-measuring plate as a probe with a surface tension measurement apparatus (model name "ST- 1S" from Shimazu Corporation).
Carboxyl group content was determined by neutralization titration using an automated titrator (trade name "COMTITE"), reference electrodes (model number "RE201 ") and glass electrodes (model number "GE-101"; all from Hiranuma Sangyo Co., Ltd.). In particular, each dispersant was diluted to one-tenth strength with ion-exchange water, 1 g (wet weight) of the dispersant solution was weighed out and to this were added 50 g of ion-exchange water and 5 to 6 mL of 0.1 N HCl(aq) to prepare a titration sample. The titration sample was titrated with 0.1 N KOH(aq) using an automated titrator. From the first and second equivalence points, the carboxyl-group concentration of each dispersant was calculated using the equation (2) below.
$$\text{Carboxyl group content (mmol/g)} = 0.1 \ (\text{mol/mL}) \times (V_2 - V_1) \ (\text{mL}) \times 1000/WS \ (g) \qquad (2)$$

In the equation (2), $V_1$ is the volume in mL of KOH(aq) at the first equivalence point, $V_2$ is the volume in mL of KOH(aq) at the second equivalence point, WS is the mass (g) of the non-volatiles of dispersant contained in the titration sample.

Example I

For the rubber latex, natural rubber latex (trade name "HYTEX HA" from Golden Hope Plantations) and SBR latex (trade name "Nipol LX426" from ZEON Corporation) were purchased. 60 parts of terpene tackifier resin (trade name "YS Resin PX800" from Yasuhara Chemical Co., Ltd.) was dissolved in 15 parts of toluene to prepare a resin solution. 75 parts of this resin solution (including the 15 parts toluene), 8 parts of nonionic emulsifier (trade name "NOIGEN EA120" from Dai-Ichi Kogyo Seiyaku Co., Ltd.), and 4 parts of anti-aging agent (trade name "NOCRAC NS-6" from Ouchi Shinko Chemical Industrial Co., Ltd.) were added to and dispersed by a mixer in 87 parts of ion-exchange water to prepare a resin emulsion containing a tackifier resin. 50 parts of the natural rubber latex, 50 parts of the SBR latex and 174 parts of the resin emulsion (wet weight including the 15 parts toluene and 87 parts ion-exchange water) were mixed to prepare a base PSA.
To 100 parts of the rubber latexes (i.e., the total amount of natural rubber latex and SBR latex) of the base PSA, 4 parts of Dispersant A and 3 parts of Dispersant B were added and mixed to obtain an aqueous PSA dispersion of Example 1.

Examples 2 to 10

The types of dispersant and emulsifier used for each example and their amounts added per 100 parts of the rubber latexes are shown in Table 2. Otherwise, aqueous PSA dispersions of Examples 2 to 10 were prepared in the same manner as Example 1. In Table 2, each numerical value represents the amount in parts of the subject component added per 100 parts of the rubber latexes.

Each of the aqueous PSA dispersions of Examples 1 to 10 was evaluated for the stability against mechanical shear by mechanical stability test as described below. Each PSA composition was coated to a first surface of a PVC sheet of 80-$\mu$m thickness and dried to prepare a PSA sheet for Examples 1 to 10. These PSA sheets were evaluated for water resistance by water resistance test as described below. A kiss roll coater was used for the coating of PSA compositions. The coating amount was adjusted so that the dried PSA layer had a thickness of 20 $\mu$m. The results are shown in Table 2.

Mechanical Stability Test

50 L of each PSA composition of Examples 1 to 10 was circulated through Nylon mesh of 80 mesh at a flow rate of 2.5 kg/min for 30 minutes using a gear pump (model number "CDSE-50G," displacement of 6.25 cc/rev, from Takachiho Kikai K.K.). The amount of aggregates accumulated on the Nylon mesh was determined by taking the difference in mass of the Nylon mesh before and after the test. According to the mass of aggregates (the amount of aggregate formation), the mechanical stability of each PSA composition was graded in the following three levels:

　　E: excellent; the amount of aggregate formation is at most 10 g.
　　I: intermediate; the amount of aggregate formation exceeds 10 g up to 50 g.
　　P: poor, the amount of aggregate formation exceeds 50 g

Water Resistance Test

Each PSA sheet of Examples 1 to 10 was cut to 20 mm width by 100 mm length to prepare a first test piece. Each first test piece was press-bonded to an adherend SUS304 stainless steal plate by reciprocating a 2-kg roller once. This was stored at 23 °C for 30 minutes and adhesive strength (first adhesive strength) in N/20mm was measured in accordance with the JIS Z0237 protocols at a temperature of 23 °C and relative humidity of 50% using a tensile testing machine at a pulling speed of 300 mm/min and a peel angle of 180°. A second test piece on a SUS304 stainless steal plate prepared in the same way was immersed in water at room temperature for 7 days. 2 hours after the sample was removed from water, the adhesive strength (second adhesive strength) was measured in the same way as above. The percent retention of adhesive strength after water immersion was determined by substituting the obtained values into the following equation (3):

$$\% \text{ retention of adhesive strength}$$

$$= (\text{second adhesive strength/first adhesive strength}) \times 100 \qquad (3)$$

Based on the percent retention, the water resistance of each PSA sheet was graded in the following three levels:

　　E: excellent; the retention of adhesive strength is 80% or greater
　　I: intermediate; the retention of adhesive strength is at least 50%, but no greater than 80%
　　P: poor; the retention of adhesive strength is less than 50%

Table 2

|  | Ex. 1 | Ex. 2 | Ex. 3 | Ex. 4 | Ex. 5 | Ex. 6 | Ex. 7 | Ex. 8 | Ex. 9 | Ex. 10 |
|---|---|---|---|---|---|---|---|---|---|---|
| Dispersant A | 4 | 6 |  |  | 15 |  |  |  |  | 6 |
| Dispersant B |  |  | 5 | 3 |  | 6 |  |  |  |  |
| Dispersant C |  |  |  |  |  |  |  | 6 |  |  |
| Dispersant D |  |  |  |  |  |  |  |  | 6 |  |
| Emulsifier A | 3 |  | 2 |  | 2 | 10 |  | 2 |  |  |

(continued)

|  | Ex. 1 | Ex. 2 | Ex. 3 | Ex. 4 | Ex. 5 | Ex. 6 | Ex. 7 | Ex. 8 | Ex. 9 | Ex. 10 |
|---|---|---|---|---|---|---|---|---|---|---|
| Emulsifier B |  | 2 |  | 4 |  |  |  |  | 2 |  |
| Stability | E | E | E | E | E | E | P | P | P | P |
| Water Resistance | E | E | E | E | I | I | E | E | E | E |

As shown in Table 2, with the PSA compositions of Examples 1 to 6, with each containing a prescribed dispersant (Dispersant A or B) and prescribed emulsifier (Emulsifier A or B), the amount of aggregate formation was low in the mechanical stability test and was excellent in the stability against mechanical shear. The composition of Example 7 containing neither a dispersant nor emulsifier exhibited poor mechanical stability The compositions of Examples 8 and 9 containing a non-prescribed dispersant (Dispersant C or D) and an emulsifier; and the composition of Example 10 containing a prescribed dispersant (Dispersant A), but no emulsifier; all showed poor mechanical stability The PSA sheets prepared with the compositions of Examples 1 to 4, with each containing 15 parts or less (more particularly, 5 to 10 parts) of dispersant and emulsifier combined to 100 parts of rubber latexes, showed greater water resistance (greater retention of adhesive strength, i.e., less degradation of adhesive strength after water-immersion) as compared to the PSA sheets prepared with the compositions of Examples 5 and 6, with each containing more than 15 parts of said additives combined.

As described above, the aqueous-dispersion-type PSA composition of the present invention shows excellent dispersion stability (especially, stability against mechanical shear). Therefore, high-quality PSA sheets can be produced efficiently from this composition. The PSA composition and PSA sheet of the present invention can be applied, for instance, in various fields where a PSA sheet containing a rubber PSA layer (may be a rubber PSA layer formed of a solvent-type PSA composition) has been used conventionally For example, it is suitable as a PSA sheet for electric insulation, protection and/or bundling of wire harnesses (for automobiles etc.), electrical parts (transformers, coils, etc.), interlayer or outer insulation of electronic parts, labels, tags and so on as well as a PSA composition used to produce said PSA sheet It can be used for various other applications such as cardboard packing, medical procedures, masking and so on. It is particularly useful for electric insulation, and protection or bundling of wire harnesses.

**Claims**

1. An aqueous-dispersion-type pressure-sensitive adhesive composition, comprising:

   a rubber latex;
   a tackifier resin emulsion;
   a dispersant composed primarily of a polycarboxylic acid or salt thereof having a hydrophobic side chain; and
   an emulsifier composed primarily of a polyoxyehtylene alkyl ether sulfuric acid ester having an average polymerization degree of 16 to 80 with the alkyl group having 8 to 18 carbon atoms

2. The composition of claim 1, wherein the dispersant satisfies both of the following conditions:

   an aqueous solution thereof at 1% by mass has a surface tension of 25 to 45 mN/m at 20 °C; and
   the dispersant contains carboxyl group at 2 to 6 mmol/g determined by neutralization titration.

3. The composition of claim 1 or 2, wherein the polycarboxylic acid or salt thereof is a copolymer of styrene and acrylic acid.

4. The composition of any one of claims 1 to 3, wherein, based on the non-volatiles, the dispersant and the emulsifier amount to 0.3 to 10 parts by mass and 0. 1 to 6 parts by mass, respectively, to 100 parts by mass of the rubber latex while the dispersant and the emulsifier, when combined, amount to a total of 15 parts by mass or less.

5. The composition of any one of claims 1 to 4, wherein, based on the non-volatiles, the tackifier resin emulsion amounts to 20 to 200 parts by mass to 100 parts by mass of the rubber latex.

6. A pressure-sensitive adhesive sheet comprising a pressure-sensitive adhesive layer formed of the composition of any one of claims 1 to 5.

**7.** The pressure-sensitive adhesive sheet of claim 6 comprising a polyvinyl chloride sheet substrate, wherein the pressure-sensitive adhesive layer is provided on at least a first surface of the sheet substrate.

**8.** The pressure-sensitive adhesive sheet of claim 6 comprising a paper substrate, wherein the pressure-sensitive adhesive layer is provided on at least a first surface of the paper substrate.

Figure 1

Figure 2

Figure 3

Figure 4

14

2
3

Figure 5

15

3
2
1

Figure 6

16

2
1

Figure 7

cm −1

Figure 8

cm −1

Europäisches
Patentamt

European
Patent Office

Office européen
des brevets

# EUROPEAN SEARCH REPORT

Application Number

EP 09 00 0731

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 808 469 A (NITTO DENKO CORP [JP]) 18 July 2007 (2007-07-18) * abstract * * paragraph [0045]; claims 1,2,5-7,12; examples * | 1,2,4-8 | INV. C09J7/02 C09J7/04 C09J121/02 |
| D | & JP 2007 211231 A (NITTO DENKO CORP) 23 August 2007 (2007-08-23) ----- | 1,2,4-8 | |
| A | US 2004/213992 A1 (SHIRAI MITSUYOSHI [JP] ET AL) 28 October 2004 (2004-10-28) * abstract * * paragraphs [0035], [0070] * ----- | 1-8 | |

TECHNICAL FIELDS SEARCHED (IPC)

C09J

The present search report has been drawn up for all claims

| Place of search | Date of completion of the search | Examiner |
|---|---|---|
| Munich | 17 April 2009 | Meier, Stefan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 09 00 0731

This annex lists the patent family members relating to the patent documents cited in the above-mentioned European search report.
The members are as contained in the European Patent Office EDP file on
The European Patent Office is in no way liable for these particulars which are merely given for the purpose of information.

17-04-2009

| Patent document cited in search report | | Publication date | Patent family member(s) | | Publication date |
|---|---|---|---|---|---|
| EP 1808469 | A | 18-07-2007 | JP 2007211231 A<br>KR 20070076460 A<br>US 2007167546 A1 | | 23-08-2007<br>24-07-2007<br>19-07-2007 |
| JP 2007211231 | A | 23-08-2007 | EP 1808469 A2<br>KR 20070076460 A<br>US 2007167546 A1 | | 18-07-2007<br>24-07-2007<br>19-07-2007 |
| US 2004213992 | A1 | 28-10-2004 | CN 1557002 A<br>WO 03015107 A1<br>JP 2003331673 A<br>TW 593620 B | | 22-12-2004<br>20-02-2003<br>21-11-2003<br>21-06-2004 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008010562 A
- JP 2007211231 A
- JP H7331208 B
- JP H7133473 B
- JP 2007056248 A